# EUROPÄISCHE PATENTSCHRIFT

(11) **EP 2 990 689 B1**
(45) Veröffentlichungstag und Bekanntmachung des Hinweises auf die Patenterteilung: **13.01.2021**
(21) Anmeldenummer: 15162128.1
(22) Anmeldetag: 01.04.2015
(51) Int. Cl.: F16H 9/04, F16H 55/48

(54) **RIEMENSCHEIBE SOWIE RIEMENTRIEB MIT DERARTIGER RIEMENSCHEIBE**
PULLEY AND BELT DRIVE WITH SUCH A PULLEY
POULIE À COURROIE ET DISPOSITIF DE TRANSMISSION PAR COURROIE DOTÉ D'UNE TELLE POULIE À COURROIE

(30) Priorität: 17.06.2014 DE 102014211579
(43) Veröffentlichungstag der Anmeldung: 02.03.2016
(73) Patentinhaber: ContiTech Antriebssysteme GmbH, 30165 Hannover (DE)
(72) Erfinder: Konya, Alexander, 30171 Hannover (DE)
(74) Vertreter: Kilsch, Armin Ralph

(56) Entgegenhaltungen:
- EP-A2- 2 014 936
- FR-A1- 2 319 804
- US-A- 5 540 626

## Beschreibung

Die Erfindung betrifft eine Riemenscheibe für einen Riementrieb, mit einem Außenring, der radial außenseitig einen umlaufenden Aufnahmebereich zur Aufnahme eines Riemens aufweist, einer Innenscheibe, die koaxial in den Außenring eingebracht und zur Befestigung auf einer Welle ausgebildet ist, und einem ringförmigen Federkörper aus elastischem Material, der zwischen dem Außenring und der Innenscheibe angeordnet ist und diese miteinander verbindet. Der Federkörper weist in Axialrichtung X zu jeder seiner Stirnseiten einen Stirnseitenabschnitt und zwischen den Stirnseitenabschnitten einen Mittenabschnitt auf, wobei eine radiale Wandstärke W1 des Mittenabschnitts kleiner als eine radiale Wandstärke W2 jeder der Stirnseitenabschnitte ist, wobei die Wandstärke W1 des Mittenabschnitts die minimale oder die mittlere Wandstärke W1 des Mittenabschnitts und die Wandstärke W2 des jeweiligen Stirnseitenabschnittes die minimale oder die mittlere Wandstärke W2 des Stirnseitenabschnitts sind.

Außerdem betrifft die Erfindung einen Riementrieb mit mindestens zwei Riemenscheiben und einem umlaufenden Riemen, der radial außenseitig in die Riemenscheiben eingreift, wobei mindestens einer der Riemenscheiben gemäß der zuvor genannten Riemenscheibe ausgestaltet ist.

Riementriebe, die auch als Riemengetriebe bezeichnet werden, sind aus dem Stand der Technik bekannt. Sie dienen zur Übertragung einer mechanischen Leistung von einer Antriebswelle auf eine Abtriebswelle. Dazu ist auf der Antriebswelle sowie auf der Abtriebswelle jeweils eine Riemenscheibe befestigt. Außerdem ist als Leistungsübertragungsmittel ein Riemen vorgesehen, der beide Riemenscheiben zumindest abschnittsweise umschlingt. Der Riemen kann als Keilriemen ausgebildet sein. Korrespondierend können die Riemenscheiben als Keilriemenscheiben ausgebildet sein. Um eine möglichst genaue Synchronisation der Antriebswelle mit der Abtriebswelle zu erreichen, können die Riemenscheiben jeweils als Zahn-Riemenscheiben ausgebildet sein. Diese weisen jeweils an ihrer radial außenseitigen Umfangsfläche Zähne auf. Zumeist weisen die Zahn-Riemenscheiben an ihren Stirnseiten jeweils eine Bordscheibe auf, um eine Axialführung zu gewährleisten. Der Riemen kann entsprechend als Zahnriemen ausgestaltet sein. Dazu weist der Riemen an seiner radialen Innenumfangsfläche Zähne auf. Mehrere der Zähne des Zahnriemens greifen dabei formschlüssig in die gezahnten Riemenscheiben. Der Eingriff der Zähne erfolgt dabei in dem sogenannten Umschlingungsbogen.

Riementriebe werden beispielsweise für elektromechanische Lenksysteme von Fahrzeugen eingesetzt. Ein entsprechender Riementrieb kann dazu eingesetzt werden, um eine mechanische Leistung von einem Elektromotor zu einer Kugelgewindespindel der Lenkung zu übertragen. Um eine möglichst genaue Synchronisation zwischen dem Elektromotor und der Kugelgewindespindel zu erreichen, ist der Riemen für dieses Anwendungsbeispiel als Zahnriemen und die Riemenscheiben als Zahnriemenscheiben ausgebildet. Vorzugsweise ist die Verzahnung des Riemens beziehungsweise der Riemenscheiben als Schrägverzahnung ausgebildet. In der Praxis wurde festgestellt, dass bei einem Einlaufen der Zähne des Zahnriemens an die Zähne der Riemenscheibe Schwingungen entstehen. So kann es bei den Riemenscheiben zu einer Schwingungsbewegung um eine Achse in Radialrichtung (Radialachse) kommen. Dies führt dann oftmals auch zu einer Schwingungsbewegung in Axialrichtung der Riemenscheibe. Außerdem können überlagerte Schwingungsbewegungen in Radialrichtung auftreten. Die Schwingungen können bis zu einem Fahrzeuginnenraum und somit bis zu einem Fahrer übertragen werden. Der Fahrer kann diese Schwingungen als störendes Geräusch wahrnehmen.

Aus der Druckschrift KR 100780993 B1 ist eine Riemenscheibe für einen Vielkeilriementrieb bekannt, bei der zwischen einem Außenring (10, 100) und einer Innenscheibe beziehungsweise Nabe (30, 120) ein Dämpfungsring (20, 110) aus Gummimaterial angeordnet ist.

Durch den Dämpfungsring können Schwingungen, die im Bereich zwischen dem Riemen und dem Außenring entstehen, gedämpft werden, bevor sie auf die Nabe beziehungsweise Welle treffen. Hierzu kann beispielsweise ein weicher Dämpfungsring aus Gummi verwendet werden, um die gewünschten Dämpfungseigenschaften zu erzielen. Mit Bezug auf das zuvor genannte Beispiel wäre es deshalb mit dem bekannten Dämpfungsring möglich, eine Geräuschimmission für den Fahrer zu dämpfen. Bei dem Einsatz des bekannten Dämpfungsrings aus Gummimaterial besteht jedoch der Nachteil, dass sich der Abstand des Außenrings zu einer Rotationsachse der Innenscheibe derart verändert, dass der Außenring und die Innenscheibe zumindest kurzzeitig ihre koaxiale Ausrichtung verlieren. Der radiale Abstand zwischen dem Außenring und der Innenscheibe ist über die Zeit betrachtet also nicht stabil. Im Falle einer nicht koaxialen Ausrichtung laufen die Antriebswelle und die Abtriebswelle zumindest temporär asynchron zueinander. Außerdem kann es vorkommen, dass der Riemen zumindest temporär seine vorbestimmte Spannung in Umfangsrichtung verliert und die Gefahr eines Überspringens der Zähne besteht.

Die US 5 540 626 A offenbart eine Riemenscheibe mit Dämpfung, bei der ein Ring aus schwingungsdämpfendem Material zwischen einem Außenring und einem als Flansch ausgebildeten Innenring angeordnet ist. Der Außenring weist eine Reihe von über den Umfang verteilten Vorsprüngen auf, die axial ausgerichtet sind und nach peripher nach innen vorspringen. Entsprechend axial ausgerichtete Vorsprünge sind auch auf dem zugehörigen Innenring ausgebildet. In weiteren Ausführungen sind Riemenscheiben offenbart, bei der der Innenring oder innere Flansch einen im mittleren Bereich der Riemenscheibe vorspringenden, umlaufenden in Umfangsrichtung ausgerichteten Vorsprung aufweist oder auch an seinen Endbereichen aufgebogen ist, wodurch der Federring / Ring aus schwingungsdämpfendem Material zwischen Außenring und Innenring fixiert ist.

Die EP 2 014 936 A2 offenbart eine selbstschmierende Konstruktion eines gattungsfremden Laufrads, jedoch keinerlei spezifische mittige Verringerung des Querschnitts bzw. der Dicke des Federrings. Die FR 2 319 804 A1 offenbart einen gattungsgemäßen Riementrieb, bei dem die Anordnung eines Federrings abhängig vom Längen-Durchmesser-Verhältnis der zugehörigen Getriebewelle vorgeschlagen wird.

Für die Erfindung bestand daher die Aufgabe, eine Riemenscheibe bereitzustellen, die eine Schwingungsdämpfung und eine Abstandsstabilität zwischen dem Außenring und der Innenscheibe gewährleistet.

Gemäß einem ersten Aspekt wird die Aufgabe durch die Merkmale des Anspruchs 1 gelöst. Vorteilhafte Ausbildungen werden durch die zugehörigen Unteransprüche offenbart. Außerdem wird die Aufgabe gemäß einem zweiten Aspekt durch die Merkmale des Anspruchs 10 gelöst.

Der Erfindung liegt der Gedanke zugrunde, dass der Federkörper in Axialrichtung zu jeder seiner Stirnseiten einen Stirnseitenabschnitt und zwischen den Stirnseitenabschnitten einen Mittenabschnitt aufweist, und eine radiale Wandstärke des Mittenabschnitts kleiner als eine radiale Wandstärke jeder der Stirnseitenabschnitte ist, wobei dass der Außenring an seiner radial innenseitigen Umfangsfläche eine Nut oder einen Steg aufweist, wobei diese Nut beziehungsweise dieser Steg radial auf den Mittenabschnitt des Federkörpers drückt..

Die zugehörige Riemenscheibe umfasst einen Außenring und eine Innenscheibe. Je nach Anwendungsgebiet können der Außenring und/oder die Innenscheibe aus festen Material hergestellt sein. So können der Außenring und/oder die Innenscheibe beispielsweise aus Metall, Kunststoff oder einem Faserverbundwerkstoff hergestellt sein. Dabei ist es denkbar, dass der Außenring aus einem der Werkstoffe und die Innenscheibe aus einem anderen der Werkstoffe hergestellt sind. Der Außenring als solches ist vorzugsweise als hohlzylindrischer Körper ausgebildet, so dass die Innenscheibe in den zylindrischen Hohlraum des Außenrings eingebracht werden kann. Die Innenscheibe weist vorzugsweise eine Nabe auf, um auf einer Welle, beispielsweise einer Antriebswelle oder Abtriebswelle, befestigt zu werden. Dabei ist es vorgesehen, dass der Außenring und die Innenscheibe koaxial zueinander ausgerichtet sind. Sie haben also eine gemeinsame Längsachse bzw. Rotationsachse. Außerdem bilden der Außenring und die Innenscheibe einen scheibenförmigen Körper. Darüber hinaus ist es vorgesehen, dass der Innendurchmesser des Außenrings größer als der Außendurchmesser der Innenscheibe ist, so dass zwischen dem Außenring und der Innenscheibe ein ringförmiger Bereich entsteht, in dem der erfindungsgemäße ringförmige Federkörper aus elastischem Material angeordnet ist, um den Außenring und die Innenscheibe mechanisch miteinander zu verbinden. Besonders bevorzugt ist das elastische Material ein Elastomer. So kann der Federkörper aus Gummi, insbesondere einem Hartgummi, oder einem Kautschuk hergestellt sein.

Um eine möglichst koaxiale Ausrichtung des Außenrings zu der Innenscheibe auch im Betrieb zu gewährleisten, ist es erfindungsgemäß vorgesehen, dass die radiale Wandstärke des Mittenabschnitts des Federkörpers kleiner als die radiale Wandstärke jeder der Stirnseitenabschnitte des Federkörpers ist. Mit der Wandstärke ist die Dicke des Federkörpers in Radialrichtung gemeint. Der Mittenabschnitt ist in Axialrichtung des Federkörpers betrachtet zwischen den Stirnseitenabschnitten ausgebildet, wobei jeder der Stirnseitenabschnitte an eine Stirnseite des Federkörpers grenzt. Wird die Riemenscheibe im Betrieb nun von dem Riemen mit einer Kraft in Radialrichtung beaufschlagt, gewährleistet die kleinere radiale Wandstärke des Mittenabschnitts eine entsprechend kleine Stauchung, so dass sich der radiale Abstand zwischen dem Außenring und der Innenscheibe nur sehr gering verändert. Somit bleibt der Abstand zwischen dem Außenring und einer Längsachse der Innenscheibe auch im Betrieb zumindest im Wesentlichen stabil erhalten. In diesem Sinne wird auch von einer erhöhten Abstandstabilität gesprochen.

Um Schwingungen des Außenrings um eine Radialachse der Riemenscheibe - wie sie beispielsweise bei einem Einlaufen der Zähne des Zahnriemens an die Zähne der Riemenscheibe entstehen - zu dämpfen, ist die radialen Wandstärke jeder der Stirnseitenabschnitte größer als die radiale Wandstärke des Mittenabschnitts ausgebildet. Die Stirnseitenabschnitte erlauben deshalb eine größere Stauchung oder Dehnung als der Mittenabschnitt. Somit ist es möglich, dass der Außenring um eine Radialachse zu der Innenscheibe kippt. Die Ausrichtung der Innenscheibe bleibt bevorzugt erhalten. Mit dem Kippen des Außenrings wird der Federkörper in seinen Stirnseitenabschnitten gestaucht bzw. gedehnt und dämpft damit die Kippbewegung des Außenrings. Ein entsprechendes Schwingen des Außenrings um eine Radialachse kann somit besonders gut gedämpft werden. Dies verringert eine durch die Schwingung verursachte Geräuschimmission. Ein Riemenantrieb mit einer derartigen Riemenscheibe kann deshalb besonders leise und/oder schwingungsarm betrieben werden.

Eine wichtige Auslegung besteht darin, dass die Wandstärke des Mittenabschnitts entweder die minimale oder die mittlere Wandstärke des Mittenabschnitts ist. Die erste Alternative, d.h. die minimale Wandstärke des Mittenabschnitts ist wesentlich dafür verantwortlich, dass der Abstand zwischen dem Außenrings und der Innenscheibe stabil bzw. zumindest im Wesentlichen konstant gehalten werden kann. Weist der Mittenabschnitt somit die minimale Wandstärke des Federkörpers auf, gewährleistet eine entsprechende Ausbildung der Erfindung den gewünschten Effekt zur Lösung der Aufgabe.

Eine weitere Möglichkeit besteht darin, dass die Wandstärke des Mittenabschnitts die mittlere Wandstärke des Mittenabschnitts ist. Der Mittenabschnitt kann dazu auch die minimale Wandstärke des Federkörpers aufweisen. Gemittelt wird die Wandstärke in Axialrichtung. Indem der Mittenabschnitt des Federkörpers die kleinste mittlere Wandstärke aufweist, wird gewährleistet, dass dieser primär zur Übertragung von Kräften in Radialrichtung zwischen dem Außenring und der Innenscheibe verantwortlich ist. Indem die radiale Wandstärke des Mittenabschnitts besonders klein, insbesondere gegenüber den Stirnseitenabschnitten, gewählt wird, ist die Abstandsstabilität sichergestellt.

Die Wandstärke des jeweiligen Stirnseitenabschnittes ist die minimale oder die mittlere Wandstärke des Stirnseitenabschnitts. Die erste Alternative in diesem Sinne ist die, dass die radiale Wandstärke des Mittenabschnitts kleiner ist als eine minimale Wandstärke jeder der Stirnseitenabschnitte. Indem der Mittenabschnitt die kleinste Wandstärke aufweist, treten im Bereich des Mittenabschnitt größere Kräfte auf als im Bereich der Stirnseitenabschnitt. Der Mittenbereich trägt deshalb maßgeblich zur Übertragung von Kräften in Radialrichtung zwischen dem Außenrings und der Innenscheibe bei. Dies gewährleistet die gewünschte Abstandstabilität. Außerdem sind die Wandstärken der Stirnseitenabschnitte größer ausgebildet, so dass eine Schwingung des Außenrings um eine Radialachse effektiv gedämpft wird.

Weiterhin ist es als zweite Alternative möglich, dass die Wandstärke des jeweiligen Stirnseitenabschnittes die mittlere Wandstärke des Stirnseitenabschnitts ist. Die Mittelung der Wandstärke erfolgt hierbei in Axialrichtung. Der jeweilige Stirnseitenabschnitt kann dabei auch die jeweils zugehörige minimale Wandstärke des Stirnseitenabschnitts umfassen. Um die zuvor genannten Effekte der Abstandsstabilität und der Schwingungsdämpfung zu gewährleisten, ist es auch bei dieser Betrachtungsweise der Wandstärke notwendig, dass die mittlere Wandstärke jedes der Stirnseitenabschnitte größer als die Wandstärke des Mittenabschnitts ist, was durch diese Ausbildung erreicht wird.

Eine weitere Ausbildung besteht darin, dass die Wandstärke des Mittenabschnitts des Federkörpers zwischen 1% und 75%, vorzugsweise zwischen 5% und 60%, besonders bevorzugt zwischen 5% und 30%, der Wandstärke jedes Stirnseitenabschnitts beträgt. Weist der erste Stirnseitenabschnitt beispielsweise eine mittlere Wandstärke von 10 mm und der zweite Stirnseitenabschnitt eine mittlere Wandstärke von 12 mm auf, so ist es gemäß dieser Ausbildung beispielsweise vorgesehen, dass die mittlere Wandstärke des Mittenabschnitts des Federkörpers zwischen 1 mm und 3 mm, vorzugsweise 2 mm, beträgt. Die minimale Wandstärke des Mittenabschnitts kann hierbei beispielsweise 1 mm betragen.

Eine weitere Ausbildung kann darin bestehen, dass eine Breite des Mittenabschnitts zwischen 1% und 50%, vorzugsweise zwischen 1% und 30%, besonders bevorzugt zwischen 5% und 15%, einer Gesamtbreite des Federkörpers beträgt. Mit der Breite ist die Erstreckung des Mittenabschnitts beziehungsweise Federkörpers in Axialrichtung gemeint. So kann sich der Mittenabschnitt beispielsweise über 10 % der Gesamtbreite des Federkörpers erstrecken. Über die übrigen 90 % der Gesamtbreite erstrecken sich die beiden Stirnseitenabschnitte des Federkörpers, und zwar vorzugsweise zu je 45%. Indem der Mittenabschnitt eine vorteilhafte Breite aufweist, wird sichergestellt, dass die im Betrieb in Radialrichtung zwischen dem Außenrings und der Innenscheibe auftretenden Kräfte nicht zu einer unerwartet hohen Flächenbeanspruchung des Federkörpers im Mittenabschnitt führt. Dies gewährleistet, dass der Federkörpers die gewünschte Abstandsstabilität auch über einen längeren Betriebszeitraum sicherstellt.

Eine weitere vorteilhafte Ausbildung besteht darin, dass der Mittenabschnitt in Axialrichtung mittig zu den Stirnseiten des Federkörpers, des Außenrings und/oder der Innenscheibe ausgerichtet ist. Indem der Mittenabschnitt des Federkörpers die geringste Wandstärke aufweist, hat der Mittenabschnitt einen maßgeblichen Einfluss auf eine längsaxiale Ausrichtung der Radialachse, um die der Außenring relativ zu der Innenscheibe kippen kann. Indem der Mittenabschnitt mittig zu den Stirnseiten angeordnet ist, wird auch die genannte Radialachse in längsaxialer Richtung mittig ausgerichtet, was ein symmetrisches Verkippen des Außenrings zu der Innenscheibe gewährleistet. In der Praxis wurde festgestellt, dass eine derartige Ausbildung keine weiteren Schwingungsbewegungen anregt, so dass mit dieser Ausbildung Schwingungsanteile verhindert werden können.

Mit der Nut oder dem Steg kann die radial außenseitig Umfangsfläche der Innenscheibe eine Form bereitzustellen, um die radiale Wandstärke des Mittenabschnitts kleiner als eine radiale Wandstärke jeder der Stirnseitenabschnitte auszugestalten. Dies gilt insbesondere dann, wenn der Federkörpers mittels eines Spritzgussverfahrens hergestellt wird. In diesem Fall kann der Federkörper in den Freiraum zwischen dem Außenrings und der Innenscheibe eingespritzt werden, so dass sich mit diesem Herstellungsschritt die gewünschten Wandstärken ergeben.

Hier gilt also dasselbe wie in der grundlegenden Ausbildung, die darin besteht, dass der Außenring an seiner radial innenseitigen Umfangsfläche eine Nut oder einen Steg aufweist, wobei diese Nut beziehungsweise dieser Steg radial auf den Mittenabschnitt des Federkörpers drückt, wie dies im Anspruch 1 ausgeführt ist. Bezüglich der Form an der radial innenseitigen Umfangsfläche des Außenrings wird auf die vorherige Erläuterung verwiesen, wobei analoge Überlegungen und Vorteile gelten.

Unter Bezugnahme auf die beiden vorangehenden Ausbildungen ist es beispielsweise möglich, dass der Außenring an seiner radial innenseitigen Umfangsfläche einen Steg und die Innenscheibe an ihrer radial außenseitigen Umfangsfläche ebenfalls einen Steg aufweisen, wobei beide Stege zueinander zeigen. Mit dieser Ausbildung des Außenrings bzw. der Innenscheibe kann der Mittenabschnitt des Federkörpers eine besonders kleine, minimale Wandstärke und/oder eine besonders kleine, mittlere Wandstärke aufweisen. Zu den längsaxialen Seiten der Stege können sich die beiden Stirnseitenabschnitte ausbilden, die jeweils eine entsprechend größere Wandstärke aufweisen.

Eine weitere vorteilhafte Ausbildung besteht darin, dass jeder Steg im Querschnitt konvex, keilförmig oder halbkreisförmig ist und/oder dass jede Nut im Querschnitt konkav, keilförmig oder halbkreisförmig. Mit der Wahl der Querschnittsform des Stegs bzw. der Nut kann bewusst Einfluss auf die Güte der Abstandstabilität und/oder Dämpfung genommen werden. Mit einer Halbkreisform sind beispielsweise besonders hohe Flächenlasten in Radialrichtung zwischen dem Außenrings und der Innenscheibe übertragbar. Ein halbkreisförmiger Querschnitt bietet deshalb eine besonders hohe Abstandstabilität. Mit einem keilförmigen Querschnitt können sowohl die Abstandsstabilität als auch ein Kippen und somit eine entsprechende Dämpfung gewährleistet werden. In dem der Steg im Querschnitt konvex und die Nut im Querschnitt konkav ausgebildet sind, kann ein entsprechender Steg in die Nut eingreifen, so dass die Wandstärke des Mittenabschnitts besonders präzise wählbar bzw. herstellbar ist.

Eine weitere vorteilhafte Ausbildung besteht darin, dass der Federkörper im Mittenabschnitt durch die mindestens eine Nut und/oder den mindestens einen Steg in Radialrichtung eingeschnürt ist. Grundsätzlich ist es möglich, dass der ringförmige Federkörpers bei der Montage der Riemenscheibe zwischen die Innenscheibe und den Außenrings eingebracht wird, nachdem die Innenscheibe koaxial in den Außenring eingesetzt ist. Mit der Nut bzw. mit dem Steg dieser Ausbildung kann der Federkörpers in Radialrichtung eingeschnürt werden, so dass der Federkörper im Mittenabschnitt einer vorbestimmten Stauchung in Radialrichtung unterliegt. Damit weist der Federkörpers im Mittenabschnitt eine erhöhte Vorspannung in Radialrichtung auf, die eine besonders hohe Abstandsstabilität gewährleistet. In den Stirnseitenabschnitten des Federkörpers tritt die zuvor genannte, erhöhte Vorspannung nicht auf, so dass eine effektive Dämpfung einer Schwingung um eine Radialachse möglich bleibt.

Eine weitere vorteilhafte Ausbildung besteht darin, dass im Mittenabschnitt des Federkörpers ein Verstärkungsring in den Federkörper eingebracht ist. Der Verstärkungsringe hat vorzugsweise eine höhere Steifigkeit als das elastische Material des Federkörpers. Indem der Verstärkungsring in den Federkörpers eingebracht wird, erhöht sich die Steifigkeit des Mittenabschnitts des Federkörpers, so dass die im Betrieb zwischen dem Außenring und der Innenscheibe wirkenden Radialkräfte zu einer geringeren Verschiebung des Außenrings relativ zu der Längsachse der Innenscheibe führen. Der eingebrachte Verstärkungsring trägt deshalb zu einer erhöhten Abstandsstabilität bei.

Eine weitere vorteilhafte Ausbildung besteht darin, dass der Federkörper eine geringere Steifigkeit als der Außenring und/oder die Innenscheibe aufweist. Durch die geringere Steifigkeit des Federkörpers wird dieser und nicht der Außenrings bzw. die Innenscheibe bei einem Auftreten von Schwingungen verformt. Der Außenring bzw. die Innenscheibe behalten deshalb zumindest im Wesentlichen ihre Form bei, auch wenn Kräfte zwischen dem Außenrings und der Innenscheibe auftreten, die das Schwingen anregen können. Indem der Außenring seine Form zumindest im Wesentlichen beibehält, kann dieser einen Riemen besonders sicher führen, was die Gefahr eines Ablaufen oder eines Überspringen verringert. Durch die Formerhaltung der Innenscheibe können besonders hohe Drehmomente von der Innenscheibe auf eine Welle übertragen werden.

Eine weitere vorteilhafte Ausbildung besteht darin, dass eine Steifigkeit des Federkörpers im Mittenabschnitt größer ist als eine Steifigkeit jeder der Stirnseitenabschnitte des Federkörpers. So kann der Federkörpers im Mittenabschnitt ein elastisches Material mit einer höheren Steifigkeit aufweisen als in den beiden Stirnseitenabschnitten. Der Mittenabschnitt und/oder die Stirnseitenabschnitte können darüber hinaus jeweils mehrere Materialschichten aufweisen. Sie können also jeweils als ein Verbundmaterial oder Verbundwerkstoff hergestellt sein. Mit der erhöhten Steifigkeit im Mittenabschnitt verringert sich die Stauchung bzw. Dehnung in Radialrichtung, was eine erhöhte Abstandstabilität bietet. Die Stirnseitenabschnitte weisen jeweils eine geringere Steifigkeit auf, um ein Kippen des Außenrings relativ zu der Innenscheibe zu ermöglichen und um eine entsprechende Schwingung zu dämpfen.

Eine weitere vorteilhafte Ausbildung besteht darin, dass die Riemenscheibe rotationssymmetrisch und/oder spiegelsymmetrisch ausgestaltet ist. Jede der genannten Symmetrien trägt dazu bei, dass weniger Schwingungen im normalen Betrieb angeregt werden. Somit ist eine derartige Ausbildung besonders schwingungsarm. Die verbleibenden Schwingungen können deshalb besonders effektiv durch die Stirnseitenabschnitte des Federkörpers gedämpft werden.

Eine weitere vorteilhafte Ausbildung besteht darin, dass die Riemenscheibe als Überlastkupplung ausgebildet ist. Dazu ist die kraft-, stoff- und/oder formschlüssige Verbindung zwischen dem ringförmigen Federkörper und dem Außenring oder der Innenscheibe vorzugsweise derart ausgebildet, dass bei einem vorbestimmten Drehmoment eine Relativbewegung zwischen dem Außenring und der Innenscheibe entsteht.

Außerdem liegt der Erfindung der Gedanke zugrunde, dass zumindest eine Riemenscheibe eines Riementriebs erfindungsgemäß ausgestaltet ist. Ein Riementrieb weist für gewöhnlich mindestens zwei Riemenscheiben und einen umlaufenden Riemen auf, der radial außenseitig in die Riemenscheiben eingreift. Somit ist ein entsprechender Riementrieb besonders geräuscharm, da Schwingungen durch den Federkörper besonders gut gedämpft werden können. Außerdem eignet sich der Riementrieb zur Übertragung von hohen Leistungen, da die Riemenscheiben eine hohe Abstandstabilität aufweisen, so dass die Gefahr eines Überspringens oder Ablaufens des Riemens auch bei höheren Lasten vermieden wird.

Die Erfindung wird nachstehend ohne Beschränkung des allgemeinen Erfindungsgedankens anhand von Ausführungsbeispielen unter Bezugnahme auf die Zeichnungen beschrieben. In den Zeichnungen zeigen:
- Fig. 1: eine schematische Schnittdarstellung eines Riementriebs mit einer erfindungsgemäßen Riemenscheibe,
- Fig. 2: eine schematische Schnittdarstellung einer erfindungsgemäßen Riemenscheibe,
- Fig. 3: eine schematische Darstellung der Riemenscheibe aus Fig. 2 entlang eines Schnitts B-B,
- Fig. 4: eine schematische Draufsicht auf einen Aufnahmebereich eines Außenrings einer erfindungsgemäßen Riemenscheibe, und
- Fig. 5 bis 22: jeweils einen schematischen Ausschnitt einer Ausbildung eines Übergangs zwischen dem Außenring und der Innenscheibe.

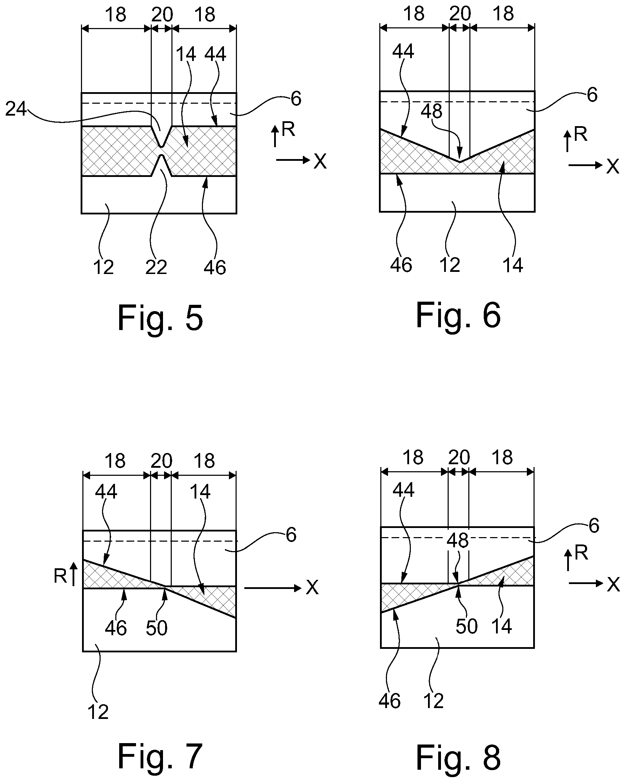

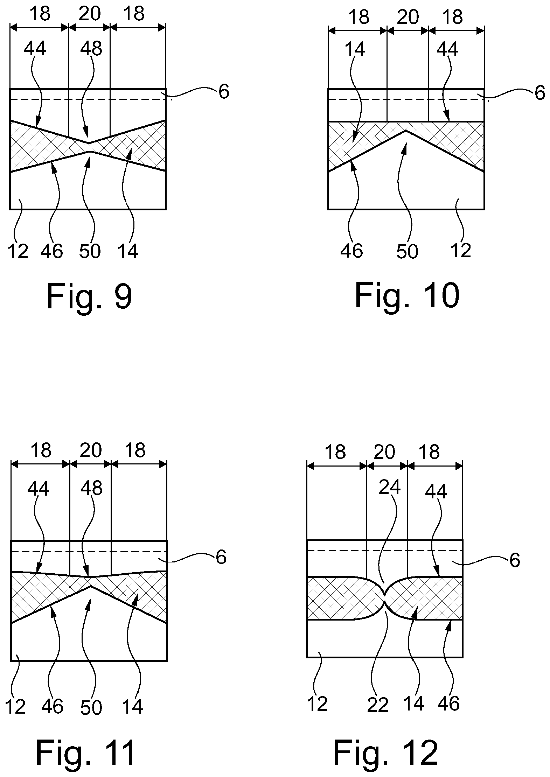

Die Darstellungen in den Fig. 7, 8, 10, 11 und 16 gehören nicht zur Erfindung.

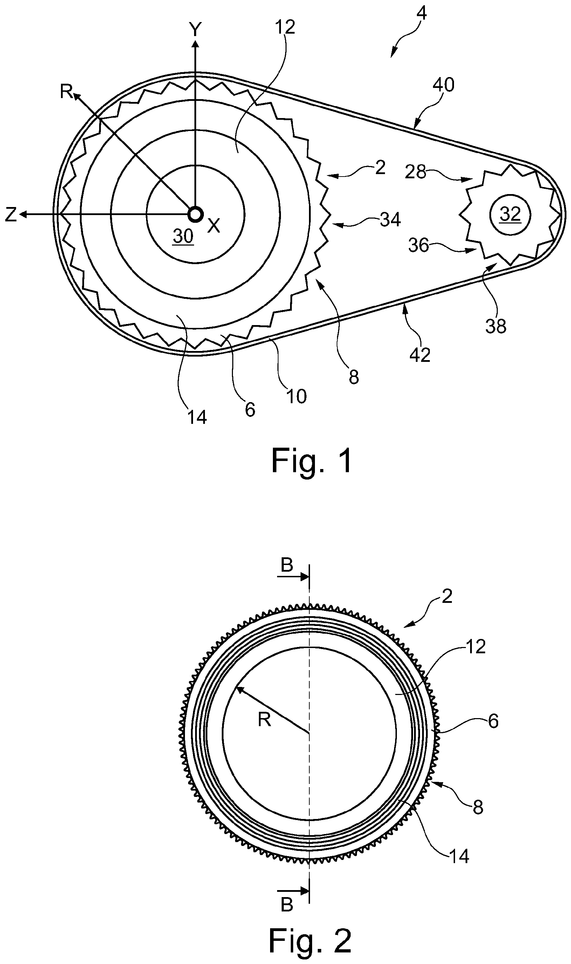

Die Figur 1 zeigt den erfindungsgemäßen Riementrieb 4. Der Riementrieb 4 umfasst dabei die ebenfalls erfindungsgemäße Riemenscheibe 2. Die erfindungsgemäße Riemenscheibe 2 und eine weitere Riemenscheibe 28 sind für den Riementrieb 4 von einem Riemen 10 zumindest teilweise umschlungen. Die erfindungsgemäße Riemenscheibe 2 ist mit einer Abtriebswelle 30 und die weitere Riemenscheibe 28 ist mit einer Antriebswelle 32 verbunden. Durch den Eingriff des Riemens 10 in beide Riemenscheiben 2, 28 wird eine mechanische Leistung von der Antriebswelle 32 auf die Abtriebswelle 30 übertragen. Bevorzugt sind beide Riemenscheiben 2, 28 als Zahnriemenscheiben ausgebildet. Sie weisen dazu entsprechende Zähne 34 bzw. 36 auf. Die Zähne 34 bzw. 36 sind jeweils an dem außenseitigen Aufnahmebereich 8 bzw. 38 der Riemenscheiben 2 bzw. 28 angeordnet. Der Riemen 10 weist an seiner innenseitigen Umfangsfläche ebenfalls Zähne (nicht dargestellt) auf. Die Zähne des Riemens 10 greifen bei einem Umlauf des Riemens 10 in die Zähne 34, 36 der Riemenscheiben 2, 38, was eine Synchronisation der Riemenscheiben 2, 28 gewährleistet.

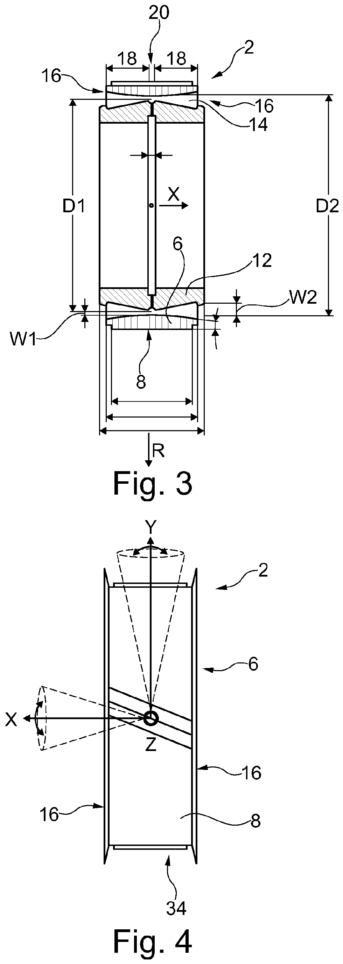

Mit dem Einlaufen des Zugtrums 40 an der Riemenscheibe 28 und/oder des Leertrums 42 an der Riemenscheibe 2 wurde in der Praxis festgestellt, dass beim Eingriff der Zähne des Riemens 10 in die Zähne 34, 36 der Riemenscheiben 2, 28 Schwingungen angeregt werden können. Im Weiteren wird das Schwingungsverhalten anhand der Riemenscheibe 2 erläutert. Die Riemenscheibe 2 wird durch das Eingreifen der Zähne des Riemens 10 in die Zähne 34 der Riemenscheibe 2 zu Schwingungen um eine Achse in Radialrichtung R, so beispielsweise um die Y-Achse oder die Z-Achse, angeregt. Insbesondere bei einer Schrägverzahnung können Schwingungen entstehen, die sich in mehreren Achsen überlagern. Um zu verhindern, dass eine derartige Schwingung, wie sie symbolisch auch aus der Figur 4 zu entnehmen ist, zu einem Überspringen der Zähne des Riemens 10 oder zu einem Ablaufen des Riemens 10 führt, ist es erfindungsgemäß vorgesehen, dass die Riemenscheibe 2 mehrteilige aufgebaut ist.

Eine entsprechende Riemenscheibe 2 ist aus den Figuren 1-3 zu entnehmen. Die Riemenscheibe 2 weist einen Außenring 6 und eine Innenscheibe 12 auf. Der Außenring 6 weist wie zuvor erläutert radial außenseitig einen umlaufenden Aufnahmebereich 8 zur Aufnahme des Riemens 10 auf. Wie in den Figuren 1-3 dargestellt, hat es sich als vorteilhaft erwiesen, wenn der Aufnahmebereich 8 an seiner radial außenseitigen Umfangsfläche Zähne 34 aufweist, in die die Zähne des Riemens 10 eingreifen können. Der Außenring 6 ist außerdem hohlzylindrisch ausgebildet, so dass der Außenring 6 einen Hohlraum bildet. In diesem Hohlraum ist die Innenscheibe 12 eingebrachte. Für die Montage ist es ferner vorgesehen, dass der Außenring 6 und die Innenscheibe 12 eine gemeinsame Drehachse in Axialrichtung X aufweisen, so dass der Außenring 6 und die Innenscheibe 12 koaxial zueinander ausgerichtet sind. Um einen ringförmigen Federkörpers 14 zwischen der Innenscheibe 12 und dem Außenring 6 anzuordnen, ist der Innendurchmesser D2 des Außenrings 6 größer als ein Außendurchmesser D1 der Innenscheibe 12. Ist die Innenscheibe 12 nun in den Außenring 6 eingesetzt, bildet sich zwischen der Innenscheibe 12 und dem Außenring 6 ein ringförmiger Hohlraum aus. In diesen ringförmigen Hohlraum wird der ringförmige Federkörper 14 aus elastischem Material eingebracht, so dass dieser zwischen dem Außenring 6 und der Innenscheibe 12 angeordnet ist. Außerdem verbindet der ringförmige Federkörper 14 den Außenring 6 mechanisch mit der Innenscheibe 12.

Durch den Riemen 10 wird die Riemenscheibe 2 mit Kräften in Radialrichtung R beaufschlagt. Über den Außenring 6 werden diese Kräfte auch an den Federkörper 14 weitergeleitet. Um nun zu verhindern, dass der Federkörper 14 in Radialrichtung R einer starken Stauchung oder Dehnung unterliegt, ist es erfindungsgemäß vorgesehen, dass der Federkörper 14 in Axialrichtung X zu jeder seiner Stirnseiten 16 einen Stirnseitenabschnitt 18 und zwischen den Stirnseitenabschnitten 18 einen Mittenabschnitt 20 aufweist, wobei eine radiale Wandstärke W1 des Mittenabschnitts 20 so ausgestaltet ist, dass sie kleiner als eine radiale Wandstärke W2 jeder der Stirnseitenabschnitte 18 ist. Unter der radialen Wandstärke W des Federkörpers 14 ist die Dicke oder Erstreckung des Federkörpers 14 in Radialrichtung R zu verstehen. So ist die radialen Wandstärke W1 des Mittenabschnitts 20 beispielsweise 1 mm. Hierbei handelt es sich um die mittlere radiale Wandstärke W1, wobei die Mittelung der Wandstärke über die Breite des Mittenabschnitts 20 in Axialrichtung X erfolgt. An den Mittenabschnitt 20 schließen in Axialrichtung X zu beiden Seiten die Stirnseitenabschnitte 18 an. Sie reichen jeweils bis zu der zugehörigen Stirnseite 16 des Federkörpers 14. Jeder der Stirnseitenabschnitte 18 weist eine radiale Wandstärke W2 von beispielsweise 10 mm auf. Hierbei handelt es sich ebenfalls um die mittlere radiale Wandstärke, die nach der zuvor genannten Mittelungsmethode bestimmt ist. Die in Radialrichtung R auf den Außenring 6 wirkenden Kräfte werden deshalb primär über den Mittenabschnitt 20 des Federkörpers 14 auf die Innenscheibe 12 übertragen. Da der Mittenabschnitt 20 nur eine sehr geringe Wandstärke W1 aufweist, unterliegt der Mittenabschnitt 20 nur einer sehr geringen Stauchung bzw. Dehnung. Deshalb bleibt die koaxiale Ausrichtung des Außenrings 6 zu der Innenscheibe 12 auch bei den zuvor genannten Kräften in Radialrichtung R zumindest im Wesentlichen erhalten.

Treten beim Einlaufen des Riemens 10 an dem Aufnahmebereich 8 der Riemenscheibe 2 Schwingungen auf und/oder läuft der Riemen 10 schräg in den Aufnahmebereich 8 ein, können auf den Außenring 6 Kräfte in Axialrichtung X einwirken. In der Praxis wurde festgestellt, dass diese Kräfte Schwingungen um eine Achse in Radialrichtung R, beispielsweise um die Achsen in Y-Richtung oder Z-Richtung, hervorrufen können. Um diese Schwingungsbewegungen zu dämpfen und möglichst nicht an die Innenscheibe 12 weiter zu geben, ist die radiale Wandstärke W2 jeder der Stirnseitenabschnitte 18 größer als die radiale Wandstärke W1 des Mittenabschnitts 20 ausgebildet. Somit wird dem Außenring 6 die Möglichkeit geboten, gedämpft um die Achsen in Y-Richtung und/oder Z-Richtung zu schwingen. Indem der Federkörper 14 aus elastischem Material ist, kann seine Dämpfungseigenschaft durch eine Materialwahl an die zu erwartende Schwingungsfrequenz angepasst sein. Somit werden die auftretenden Schwingungen effektiv gedämpft und nur in einem deutlich verringerten Anteil an die Innenscheibe 12 weitergegeben. Wird eine Riemenscheibe beispielsweise bei einem Lenkungssystem für ein Kraftfahrzeug eingesetzt, so wurde in der Praxis festgestellt, dass mögliche Geräuschimmissionen, die von der Riemenscheibe 2 ausgehen können, durch den Einsatz der erfindungsgemäße Riemenscheibe 2 deutlich verringerbar sind.

Die Figuren 5-20 zeigen jeweils eine bevorzugte Ausbildung einer erfindungsgemäßen Riemenscheibe 2 als Ausschnitt eines Übergangsbereichs von der Innenscheibe 12 über den Federkörper 14 zu dem Außenring 6. Den Ausbildungen ist gemeinsam, dass der Außenring 6 radial innenseitige konvex ausgebildet ist und/oder dass der Innenring 12 radial außenseitig konvex ausgebildet ist. Die größte konvexe Erstreckung ragt dabei jeweils in den Mittenabschnitt 20 des Federkörpers 14.

Aus den Figuren 5, 12, 14 und 15 ist zu erkennen, dass der Außenring 6 an seiner radial innenseitigen Umfangsfläche 44 erfindungsgemäß einen Steg 24 aufweist. Der Steg 24 ragte radial nach innen und schnürt den Federkörper 14 entsprechend ein. Der Mittenabschnitt 20 des Federkörpers 14 bildet sich deshalb im Bereich des Stegs 24 aus. Dies gilt insbesondere dann, wenn der Federkörper 14 mittels eines Spritzgießverfahrens hergestellt wird.

Aus den Figuren 5, 12 und 15 ist darüber hinaus zu erkennen, dass die Innenscheibe 12 an ihrer radial außenseitigen Umfangsfläche 46 ebenfalls einen Steg 22 aufweist. Dieser Steg 22 ragt radial nach außen und schnürt den Federkörper 14 ebenfalls entsprechend ein. Außerdem kann zumindest einer der Stege 22, 24 oder beide Stege 22, 24 als ringförmige Stege ausgebildet sein. Vorteilhafter Weise sind die Stege 22, 24 gegenüberliegend angeordnet, um die radiale Wandstärke W1 des Mittenabschnitts 20 des Federkörpers 14 besonders klein zu halten. Dies gewährleistet eine besonders gute Abstandstabilität. In Axialrichtung X können die sich zu den jeweiligen Steg 22, 24 anschließenden Teile der Umfangsflächen 44, 46 eine geeignete Form aufweisen, um zu gewährleisten, dass der Federkörper 14 im Bereich der Stirnseitenabschnitte 18 jeweils eine radiale Wandstärke W2 aufweist, die jeweils größer als die radiale Wandstärke W1 des Mittenabschnitts 20 des Federkörpers 14 sind. So können die entsprechenden Umfangsflächen 44, 46 im Querschnitt beispielsweise zylindrischen, keilförmig, bogenförmig oder eine andere geeignete Form aufweisen.

Durch die Stege 22, 24 kann der Mittenabschnitt 20 des Federkörpers 14 besonders gut bestimmt werden. Sie stellen deshalb eine erfindungsgemäß bevorzugte Ausführungsform dar. Je nach Herstellungsverfahren für die Riemenscheibe 2 können jedoch auch andere Formen für eine konvexe Ausbildung der radial innenseitigen Umfangsfläche 44 des Außenrings 6 bzw. der radial außenseitigen Umfangsfläche 46 der Innenscheibe 12 von Vorteil sein. So kann die konvexe Ausbildung beispielsweise durch eine im Querschnitt keilförmigen Umfangsfläche 44, 46 gewährleistet werden. Entsprechende Ausbildungen können den Figuren 6, 7, 8, 9, 10, 11 und 13 entnommen werden. Hierbei ist es möglich, dass auch nur eine der Umfangsflächen 44, 46 im Querschnitt keilförmigen ausgebildet ist. Analog zu der Ausgestaltung der Stege 22, 24 bestimmen auch die Spitzen 48, 50 bzw. bei einer Ausbildung mit nur einer keilförmigen Umfangsfläche 44 die eine Spitze 48 den Mittenabschnitt 20 des Federkörpers 14. Eine Erstreckung des Mittenabschnitts 20 in Axialrichtung X kann ferner dadurch festgelegt sein, dass der Mittenabschnitt 20 zwischen 1% und 30 % der Gesamtbreite des Federkörpers 14 in Axialrichtung X beträgt. So kann die Breite des Mittenabschnitts 20 beispielsweise 10 % der Gesamtbreite des Federkörpers 14 betragen.

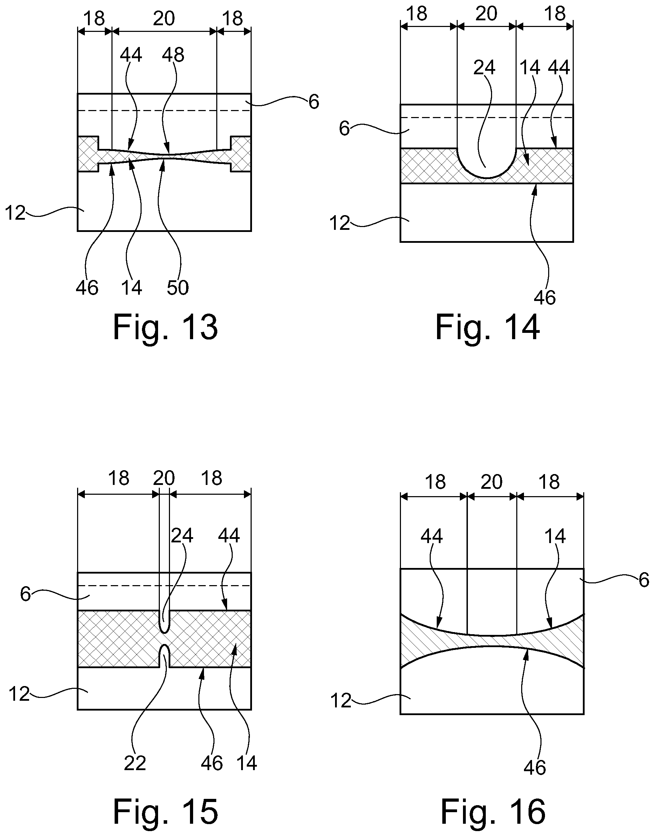

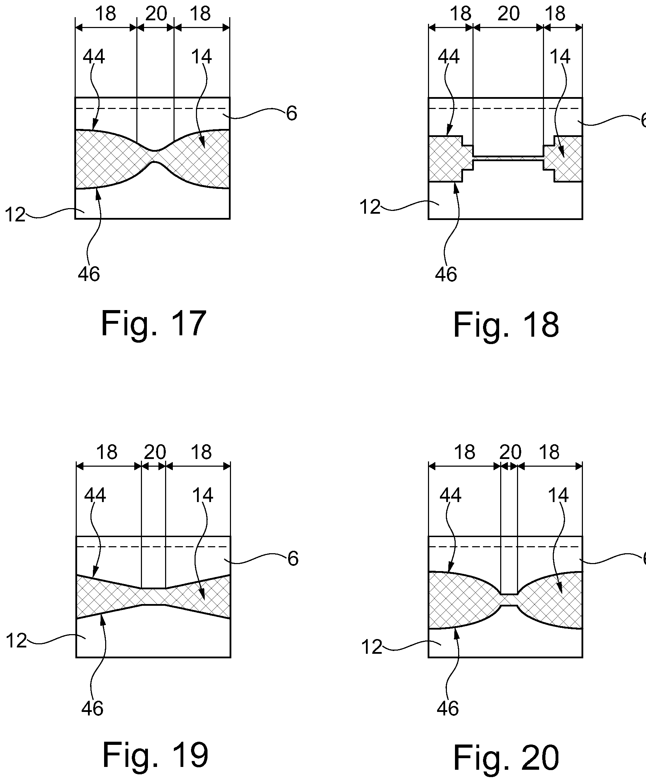

Aus den Figuren 16 und 17 ist ein Außenring 6 mit einer stetigen, bogenförmigen, radial innenseitigen Umfangsfläche 44 und eine Innenscheibe 12 mit einer stetigen, bogenförmigen, radial außenseitigen Umfangsfläche 46 ersichtlich. Diese Ausgestaltungen der Umfangsflächen 44, 46 eignen sich besonders vorteilhaft, um den Federkörper 14 mittels eines Spritzgießverfahrens herzustellen. Der Mittenabschnitt 20 wird analog zu den Stegen 22, 24 durch den minimalen Abstand zwischen dem Außenring 6 und der Innenscheibe 12 bestimmt. Außerdem kann der Mittenabschnitt 20 des Federkörpers 14 besonders breit, beispielsweise mit einer Breite von 30 % der Gesamtbreite des Federkörpers 14, gewählt sein, so dass der Mittenabschnitt 20 eine besonders hohe radiale Traglast aufweist. Riemenscheiben 2 mit einer derartigen Ausgestaltung des Federkörpers 14 weisen eine besonders große Abstandstabilität auf.

Aus den Figuren 18, 19 und 20 sind weitere Ausbildungen ersichtlich, bei denen der Querschnitt des Mittenabschnitts 20 des Federkörpers 14 rechteckförmig ist. Die entsprechende radial innenseitige Umfangsfläche 44 des Außenrings 6 im Bereich des Mittenabschnitts 20 ist deshalb als zylindrischer Ring mit konstantem Durchmesser ausgebildet. In analoger Weise ist die radial außenseitig Umfangsfläche 46 der Innenscheibe 12 im Bereich des Mittenabschnitts 20 als zylindrischer Ring mit konstanten Durchmesser ausgebildet. Derartige Formen des Außenrings 6 bzw. der Innenscheibe 12 lassen sich besonders präzise und einfach, beispielsweise mittels spanenden Verfahren, herstellen.

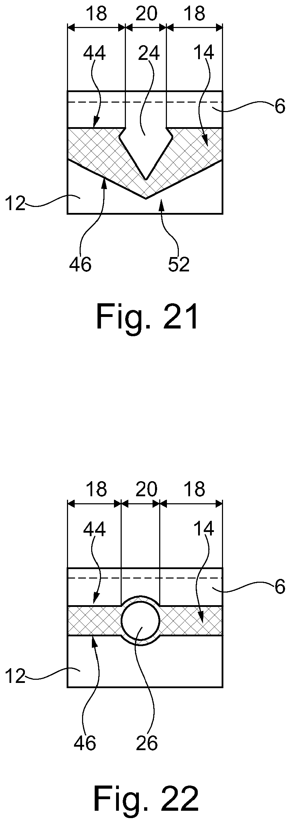

Eine weitere vorteilhafte Ausbildung, wie sie aus der Figur 21 hervorgeht, zeichnet sich dadurch aus, dass der Außenring 6 den bereits genannten Steg 24 aufweist, wobei jedoch die Innenscheibe 12 an ihrer radial außenseitigen Umfangsfläche 46 eine Nut 52 aufweist. Der Steg 24 und die Nut 52 können jeweils ringförmig ausgebildet sein. Außerdem können der Steg 24 und die Nut 52 koaxial zueinander ausgerichtet sein, so dass der Steg 24 in die Nut 52 einfasst. Zwischen dem Steg 24 und der Nut 52 bildet sich der Mittenabschnitt 20 des Federkörpers 14 aus. Durch eine gegenüberliegende Ausbildung von dem Steg 24 und der Nut 52 ist eine Positionierung des Mittenabschnitts 20 in Axialrichtung X besonders präzise möglich.

Die Figur 22 zeigt eine weitere vorteilhafte Ausbildung, wobei im Mittenabschnitt 20 des Federkörpers 14 ein Verstärkungsring 26 eingebracht ist. Die Wandstärke W1 des Federkörpers 14 im Mittenabschnitt 20 ist in diesem Fall zweiteilig anzusehen, und zwar durch einen ersten Anteil, der den Verstärkungsring 26 an seiner Oberseite bedeckt, und einem zweiten Anteil, der den Verstärkungsringe 26 an seiner Unterseite bedeckt. Die Summe der beiden Anteile bildet die Wandstärke W1 des Federkörpers 14 im Mittenabschnitt 20. Der Verstärkungsring 26 wird deshalb nicht als Teil der Wandstärke W1 des Federkörpers 14 angesehen. Zu der Wandstärke W tragen also nur jene Anteile bei, die aus dem elastischen Material des Federkörpers 14 bestehen. Besonders bevorzugt ist der Verstärkungsring 26 im Querschnitt kreisförmig. Damit kann sich der Mittenabschnitt 20 des Federkörpers 14 im Querschnitt als ein Kreisring oder als zwei Kreisringsbogensegmente um den Verstärkungsringen 26 erstrecken. Der Mittenabschnitt 20 des Federkörpers 14 kann somit eine besonders hohe Steifigkeit aufweisen, was zu einer erhöhten Abstandstabilität führt. Gleichzeitig wird jedoch ein Verkippen des Außenrings 6 relativ zu der Innenscheibe 12 ohne vergrößerte Einflussnahme durch den Mittenabschnitt 20 ermöglicht.

### Bezugszeichenliste

### (Teil der Beschreibung)

- D1: Innendurchmesser des Außenrings
- D2: Außendurchmesser der Innenscheibe
- R: Radialrichtung
- W: Wandstärke
- W1: Wandstärke Mittenabschnitt
- W2: Wandstärke Stirnseitenabschnitt
- X: Axialrichtung
- Y: Achse in Radialrichtung
- Z: Achse in Radialrichtung
- 2: Riemenscheibe
- 4: Riementrieb
- 6: Außenring
- 8: Aufnahmebereich
- 10: Riemen
- 12: Innenscheibe
- 14: Federkörper
- 16: Stirnseite
- 18: Stirnseitenabschnitt
- 20: Mittenabschnitt
- 22: Steg der Innenscheibe
- 24: Steg des Außenrings
- 26: Verstärkungsring
- 28: weitere Riemenscheibe
- 30: Abtriebswelle
- 32: Antriebswelle
- 34: Zähne
- 36: Zähne
- 38: Aufnahmebereich
- 40: Zugtrum
- 42: Leertrum
- 44: innenseitige Umfangsfläche
- 46: außenseitige Umfangsfläche
- 48: Spitze
- 50: Spitze

## Patentansprüche

1. Riemenscheibe (2) für einen Riementrieb (4), mit
- einem Außenring (6), der radial außenseitig einen umlaufenden Aufnahmebereich (8) zur Aufnahme eines Riemens (10) aufweist,
- einer Innenscheibe (12), die koaxial in den Außenring (6) eingebracht und zur Befestigung auf einer Welle ausgebildet ist, und
- einem ringförmigen Federkörper (14) aus elastischem Material, der zwischen dem Außenring (6) und der Innenscheibe (12) angeordnet ist und diese miteinander verbindet,
wobei
- der Federkörper (14) in Axialrichtung X zu jeder seiner Stirnseiten (16) einen Stirnseitenabschnitt (18) und zwischen den Stirnseitenabschnitten (18) einen Mittenabschnitt (20) aufweist, und
- eine radiale Wandstärke W1 des Mittenabschnitts (20) kleiner als eine radiale Wandstärke W2 jeder der Stirnseitenabschnitte (18) ist, wobei
- die Wandstärke W1 des Mittenabschnitts (20) die minimale oder die mittlere Wandstärke W1 des Mittenabschnitts (20) und
- die Wandstärke W2 des jeweiligen Stirnseitenabschnittes (18) die minimale oder die mittlere Wandstärke W2 des Stirnseitenabschnitts (18) ist
**dadurch gekennzeichnet, dass** der Außenring (6) an seiner radial innenseitigen Umfangsfläche eine Nut oder einen Steg (24) aufweist, wobei diese Nut beziehungsweise dieser Steg (24) radial auf den Mittenabschnitt (20) des Federkörpers (14) drückt.

2. Riemenscheibe nach Anspruch 1, **dadurch gekennzeichnet, dass** der Mittenabschnitt (20) in Axialrichtung X mittig zu den Stirnseiten (16) des Federkörpers (14), des Außenrings (6) und/oder der Innenscheibe (12) ausgerichtet ist.

3. Riemenscheibe (2) nach Anspruch 1 oder 2, **dadurch gekennzeichnet, dass** die Innenscheibe (12) an ihrer radial außenseitigen Umfangsfläche eine Nut (52) oder einen Steg (22) aufweist, wobei diese Nut (52) beziehungsweise dieser Steg (22) radial auf den Mittenabschnitt (20) des Federkörpers (14) drückt.

4. Riemenscheibe (2) nach einem der vorhergehenden Ansprüche 1 bis 3, **dadurch gekennzeichnet, dass** jeder Steg (22, 24) im Querschnitt konvex, keilförmig oder halbkreisförmig ist und/oder dass jede Nut (52) im Querschnitt konkav, keilförmig oder halbkreisförmig.

5. Riemenscheibe (2) nach einem der vorhergehenden Ansprüche 1 bis 4, **dadurch gekennzeichnet, dass** der Federkörper (14) im Mittenabschnitt (20) durch die mindestens eine Nut (52) und/oder den mindestens einen Steg (22, 24) in Radialrichtung R eingeschnürt ist.

6. Riemenscheibe (2) nach einem der vorhergehenden Ansprüche 1 bis 5, **dadurch gekennzeichnet, dass** im Mittenabschnitt (20) des Federkörpers (14) ein Verstärkungsring (26) in den Federkörper (14) eingebracht ist.

7. Riemenscheibe (2) nach einem der vorhergehenden Ansprüche 1 bis 6, **dadurch gekennzeichnet, dass** der Federkörper (14) eine geringere Steifigkeit als der Außenring (6) und/oder die Innenscheibe (12) aufweist.

8. Riemenscheibe (2) nach einem der vorhergehenden Ansprüche 1 bis 7, **dadurch gekennzeichnet, dass** eine Steifigkeit des Federkörpers (14) im Mittenabschnitt (20) größer ist als eine Steifigkeit in jedem der Stirnseitenabschnitte (18) des Federkörpers (14).

9. Riemenscheibe (2) nach einem der vorhergehenden Ansprüche 1 bis 8, **dadurch gekennzeichnet, dass** die Riemenscheibe (2) rotationssymmetrisch und/oder spiegelsymmetrisch ausgestaltet ist.

10. Riementrieb (4) mit
- mindestens zwei Riemenscheiben (2) und
- einem umlaufenden Riemen (10), der radial außenseitig in die Riemenscheiben (2) eingreift,
**dadurch gekennzeichnet, dass**
- mindestens einer der Riemenscheiben (2) nach einem der vorhergehenden Ansprüche 1 bis 9 ausgestaltet ist.

## Claims

1. Belt pulley (2) for a belt drive (4), having
- an outer ring (6), which, on the radially outer side, has an encircling accommodating region (8) for accommodating a belt (10),
- an inner sheave (12), which is introduced coaxially into the outer ring (6) and is designed to be fastened on a shaft, and
- an annular resilient body (14) made of elastic material, which is arranged between the outer ring (6) and the inner sheave (12) and connects these to one another,
wherein
- as seen in the axial direction X, the resilient body (14) has, towards each of its end sides (16), an end-side portion (18) and, between the end-side portions (18), a central portion (20), and
- a radial wall thickness W1 of the central portion (20) is smaller than a radial wall thickness W2 of each of the end-side portions (18), wherein
- the wall thickness W1 of the central portion (20) is the minimum, or the average, wall thickness W1 of the central portion (20) and
- the wall thickness W2 of the respective end-side portion (18) is the minimum, or the average, wall thickness W2 of the end-side portion (18),
**characterized in that** the outer ring (6) has a groove or a crosspiece (24) on its radially inner circumferential surface, wherein said groove or said crosspiece (24) pushes radially onto the central portion (20) of the resilient body (14).

2. Belt pulley according to Claim 1, **characterized in that**, as seen in the axial direction X, the central portion (20) is oriented centrally in relation to the end sides (16) of the resilient body (14), of the outer ring (6) and/or of the inner sheave (12).

3. Belt pulley (2) according to Claim 1 or 2, **characterized in that** the inner sheave (12) has a groove (52) or a crosspiece (22) on its radially outer circumferential surface, wherein said groove (52) or said crosspiece (22) pushes radially onto the central portion (20) of the resilient body (14).

4. Belt pulley (2) according to one of the preceding Claims 1 to 3, **characterized in that** each crosspiece (22, 24) is convex, wedge-shaped or semicircular in cross section, and/or **in that** each groove (52) is concave, wedge-shaped or semicircular in cross section.

5. Belt pulley (2) according to one of the preceding Claims 1 to 4, **characterized in that** the resilient body (14) is constricted in the radial direction R in the central portion (20) by the at least one groove (52) and/or the at least crosspiece (22, 24).

6. Belt pulley (2) according to one of the preceding Claims 1 to 5, **characterized in that**, in the central portion (20) of the resilient body (14), a reinforcement ring (26) is introduced into the resilient body (14).

7. Belt pulley (2) according to one of the preceding Claims 1 to 6, **characterized in that** the resilient body (14) has a lower level of rigidity than the outer ring (6) and/or the inner sheave (12).

8. Belt pulley (2) according to one of the preceding Claims 1 to 7, **characterized in that** a level of rigidity of the resilient body (14) in the central portion (20) is greater than a level of rigidity in each of the end-side portions (18) of the resilient body (14).

9. Belt pulley (2) according to one of the preceding Claims 1 to 8, **characterized in that** the belt pulley (2) is of rotationally symmetrical and/or mirror-symmetrical configuration.

10. Belt drive (4) having
- at least two belt pulleys (2) and
- an encircling belt (10), which engages in the belt pulleys (2) on the radially outer side,
**characterized in that**
- at least one of the belt pulleys (2) is configured according to one of the preceding Claims 1 to 9.

## Revendications

1. Poulie à courroie (2) destinée à un dispositif d'entraînement par courroie (4), comprenant
- une bague extérieure (6) qui présente du côté radialement extérieur une zone de réception (8) périphérique pour recevoir une courroie (10),
- une poulie intérieure (12) qui est introduite coaxialement dans la bague extérieure (6) et est réalisée pour être fixée sur un arbre, et
- un corps élastique annulaire (14) en matériau élastique qui est disposé entre la bague extérieure (6) et la poulie intérieure (12) et les relie l'une à l'autre,
dans laquelle
- le corps élastique (14) présente une partie de face frontale (18) dans la direction axiale X en direction de chacune de ses faces frontales (16), et présente une partie centrale (20) entre les parties de face frontale (18), et
- une épaisseur de paroi radiale W1 de la partie centrale (20) est inférieure à une épaisseur de paroi radiale W2 de chacune des parties de face frontale (18), dans laquelle
- l'épaisseur de paroi W1 de la partie centrale (20) est l'épaisseur de paroi minimale ou centrale W1 de la partie centrale (20) et
- l'épaisseur de paroi W2 de la partie de face frontale (18) respective est l'épaisseur minimale ou centrale W2 de la partie de face frontale (18), **caractérisée en ce que** la bague extérieure (6) présente sur la surface circonférentielle du côté radialement intérieur une rainure ou une nervure (24), ladite rainure ou ladite nervure (24) appuyant radialement sur la partie centrale (20) du corps élastique (14).

2. Poulie à courroie selon la revendication 1, **caractérisée en ce que** la partie centrale (20) est orientée dans la direction axiale X de manière centrée par rapport aux faces frontales (16) du corps élastique (14), de la bague extérieure (6) et/ou de la poulie intérieure (12).

3. Poulie à courroie (2) selon la revendication 1 ou 2, **caractérisée en ce que** la poulie intérieure (12) présente sur sa surface circonférentielle du côté radialement extérieur une rainure (52) ou une nervure (22), ladite rainure (52) ou ladite nervure (22) appuyant radialement sur la partie centrale (20) du corps élastique (14).

4. Poulie à courroie (2) selon l'une quelconque des revendications précédentes 1 à 3, **caractérisée en ce que** chaque nervure (22, 24) présente une section transversale convexe, conique ou semi-circulaire et/ou **en ce que** chaque rainure (52) présente une section transversale concave, conique ou semi-circulaire.

5. Poulie à courroie (2) selon l'une quelconque des revendications précédentes 1 à 4, **caractérisée en ce que** le corps élastique (14) est resserré dans la partie centrale (20) par ladite au moins une rainure (52) et/ou ladite au moins une nervure (22, 24) dans la direction radiale R.

6. Poulie à courroie (2) selon l'une quelconque des revendications précédentes 1 à 5, **caractérisée en ce que** dans la partie centrale (20) du corps élastique (14), une bague de renforcement (26) est introduite dans le corps élastique (14).

7. Poulie à courroie (2) selon l'une quelconque des revendications précédentes 1 à 6, **caractérisée en ce que** le corps élastique (14) présente une rigidité inférieure à la bague extérieure (6) et/ou à la poulie intérieure (12).

8. Poulie à courroie (2) selon l'une quelconque des revendications précédentes 1 à 7, **caractérisée en ce qu'**une rigidité du corps élastique (14) dans la partie centrale (20) est supérieure à une rigidité dans chacune des parties de face frontale (18) du corps élastique (14).

9. Poulie à courroie (2) selon l'une quelconque des revendications précédentes 1 à 8, **caractérisée en ce que** la poulie à courroie (2) est conçue à symétrie de révolution et/ou à symétrie spéculaire.

10. Dispositif d'entraînement par courroie (4), comprenant
- au moins deux poulies à courroie (2), et
- une courroie périphérique (10) qui vient en prise avec la poulie à courroie (2) du côté radialement extérieur,
**caractérisé en ce que**
- au moins l'une des poulies à courroie (2) est conçue selon l'une quelconque des revendications précédentes 1 à 9.
